# EUROPÄISCHE PATENTSCHRIFT

(11) **EP 2 489 530 B1**
(45) Veröffentlichungstag und Bekanntmachung des Hinweises auf die Patenterteilung: **02.10.2013**
(21) Anmeldenummer: 11154948.1
(22) Anmeldetag: 18.02.2011
(51) Int. Cl.: B60G 7/00, B62D 7/18, B62D 7/22

(54) **Verstellbarer Radträger**
Adjustable wheel mount
Support de roue réglable

(43) Veröffentlichungstag der Anmeldung: 22.08.2012
(73) Patentinhaber: Ford Global Technologies, LLC, Dearborn, MI 48126 (US)
(72) Erfinder: Hintzen, Ralf, 52066, Aachen (DE); Gerhards, Thomas, 52382, Niederzier (DE)
(74) Vertreter: Drömer, Hans-Carsten

(56) Entgegenhaltungen:
- EP-A1- 1 785 335
- DE-A1- 3 523 912
- DE-C2- 2 752 908
- GB-A- 2 163 104

## Beschreibung

Die vorliegende Erfindung betrifft einen verstellbaren Radträger zur Anbindung eines Fahrzeugrads an ein Fahrzeug, insbesondere an ein Kraftfahrzeug, nach dem Oberbegriff des Anspruchs 1 sowie ein Verfahren zur Veränderung der Lenkeigenschaften eines Radträgers.

Der das Fahrzeugrad aufnehmende Radträger ist ein Bauteil einer Radaufhängung, die der beweglichen Lagerung der Räder eines Kraftfahrzeugs dient. Fahrzeugaufhängungssysteme weisen im Allgemeinen mehrere Lenker zwischen dem Rahmen des Fahrzeugs und dem Radträger auf. Der Radträger ist mit dem Rahmen des Fahrzeugs zum Beispiel durch obere und untere Lenker verbunden, die eine Gelenkverbindung bilden. Diese Verbindung ermöglicht dem Fahrzeug ein gesteuertes Bewegen im Verhältnis zum Rad. Stoßdämpfer und Federn sind vorgesehen, um Stöße zu absorbieren und ein ruhiges Fahren zu ermöglichen. Andere Lenker, die den Radträger mit dem Fahrzeug verbinden können, umfassen u.a. Sturzstangen und Spurstangen, die eine Einstellung der Radstellung erlauben. Somit bestimmt die Kinematik der Radaufhängung die räumliche Bewegung des Rades bei Federungs- und Lenkbewegungen und damit maßgeblich die Fahreigenschaften des Kraftfahrzeuges im realen Betrieb.

Ein bei niedrigen und mittleren Fahrzeuggeschwindigkeiten agiles und präzises Lenkverhalten des Fahrzeugs, bei dem eine Lenkgetriebezahnstange einer Lenkeinrichtung zum Beispiel hinter dem Radmittelpunkt angeordnet ist, bedingt eine kinematische Kette zwischen Lenkgetriebe und Radträger, deren einzelne Koppelstellen lediglich eine geringe Nachgiebigkeit aufweisen. Bei hohen Fahrzeuggeschwindigkeiten führt eine derart starr ausgelegte kinematische Kette jedoch zu einem sehr direkten Ansprechen der Lenkung. Ein solches Lenkverhalten wird häufig als "nervös" empfunden und ist im Allgemeinen unerwünscht.

Die Auslegung der kinematischen Kette mit einer größeren seitlichen Nachgiebigkeit zwischen dem Lenkgetriebe und dem Radträger kann das direkte Ansprechverhalten der Lenkung bei hohen Fahrzeuggeschwindigkeiten zwar verringern, führt jedoch bei niedrigen und mittleren Geschwindigkeiten zu einem zu weichen und damit ungenau empfundenen Lenkverhalten, was ebenfalls unerwünscht ist.

Das Verhalten der kinematischen Kette ist allgemein durch die Auslegung der Koppelstellen bzw. Koppelelemente (Lenker) festgelegt (starr bis nachgiebig) und während des Betriebs des Fahrzeugs im Wesentlichen nicht veränderbar. Somit läßt sich mit einer einmaligen Festlegung bestenfalls ein Kompromiß zwischen den sich widersprechenden Zielen einer agilen und genauen Lenkung im niedrigen bis mittleren Fahrzeuggeschwindigkeitsbereich und einer im Ansprechverhalten ruhigen Lenkung bei hohen Geschwindigkeiten erreichen.

Fahrzeugaufhängungen und Radträger sind aus dem Stand der Technik vielfach bekannt. So beschreibt die DE 10 2006 031 883 A1 beispielsweise ein Fahrzeugaufhängungssystem mit einem Radträger und einer an einer Spurstange befestigten Längslenkeranordnung. Die Längslenkeranordnung wird durch ein Schaufelelement und ein Verstärkungselement gebildet. Der Radträger bildet eine axiale Bohrung aus und weist eine integral ausgebildete obere Lenkerhalterung und eine integral ausgebildete Bremssattelspur auf. Die Spurstange ist an der Längslenkeranordnung durch einen Bügel festgehalten, der durch eine in dem Schaufelelement ausgebildete Querwand und eine in dem Verstärkungselement gebildete parallele Querwand gebildet ist. Eine alternative Ausführung offenbart einen einteiligen Längslenker, der einen Bügel zur Verbindung mit der Spurstange zwischen einer Querwand und einer Lasche ausbildet, die sich parallel zu der Querwand erstreckt. Ein Verfahren zum Herstellen eines gegossenen Radträgers und einer gestanzten Längslenkeranordnung wird ebenfalls offenbart.

DE-C-2752908 zeigt eine elastische Verbindung zwischen Radlenker und Spurstange, wobei durch das Verspannen einer elastischen Buchse die Steifigkeit des Lenksystems an den verwendeten Reifen angepasst werden kann.

Vor diesem Hintergrund hat sich die vorliegende Erfindung die Aufgabe gestellt, einen Radträger zur Anbindung eines Fahrzeugrads an ein Fahrzeug, insbesondere an ein Kraftfahrzeug, aufzuzeigen, mit dem die aus dem Stand der Technik bekannten Nachteile überwunden werden und der insbesondere über die Fähigkeit verfügt, ein an unterschiedliche Betriebszustände des Fahrzeugs anpaßbares, optimales Lenkverhalten bereitzustellen. Eine weitere Aufgabe der Erfindung ist, ein Verfahren zur Veränderung der Lenkeigenschaften eines derartigen Radträgers anzugeben.

Der vorrichtungstechnische Aufgabenteil wird durch einen Radträger mit den Merkmalen des Anspruchs 1 gelöst, wobei der verfahrenstechnische Aufgabenteil durch ein Verfahren mit den Merkmalen des Anspruchs 10 gelöst wird. Weitere, besonders vorteilhafte Ausgestaltungen der Erfindung offenbaren die Unteransprüche.

Es ist darauf hinzuweisen, dass die in den Ansprüchen einzeln aufgeführten Merkmale in beliebiger, technisch sinnvoller Weise miteinander kombiniert werden können und weitere Ausgestaltungen der Erfindung aufzeigen. Die Beschreibung charakterisiert und spezifiziert die Erfindung insbesondere im Zusammenhang mit den Figuren zusätzlich.

Die Erfindung sieht einen Radträger zur Anbindung eines Fahrzeugrads an ein Fahrzeug, insbesondere an ein Kraftfahrzeug, mit einem Lenkhebel vor, dessen proximales Ende mit dem Radträger verbunden ist. Um die Querelastizität des Lenkhebels und damit das Lenkverhalten des Radträgers insgesamt beeinflussen bzw. verändern zu können, ist der Lenkhebel gemäß der Erfindung zusätzlich noch in einem distalen Abschnitt mit dem Radträger mittels wenigstens einer Kopplungseinrichtung verbindbar beziehungsweise von diesem trennbar, wobei der Lenkhebel eine höhere Querelastizität aufweist als der Rest des Radträgers. Als Querelastizität des Lenkhebels ist im Rahmen der vorliegenden Erfindung die Eigenschaft des Lenkhebels zu verstehen, seine Form unter Einwirkung einer Kraft quer zur Längserstreckung zu verändern, zum Beispiel sich zu biegen, und bei Wegfall dieser Kraft in seine Ursprungsform zurückzukehren.

An seinem proximalen Ende ist der Lenkhebel in an sich bekannter Weise mit dem Radträger verbunden, zum Beispiel einstückig mit diesem ausgebildet oder durch andere stoff- und/oder formschlüssige Verbindungstechniken, zum Beispiel Schweißen, Kleben, Schrauben, Nieten und dergleichen, mit diesem verbunden.

Mit dem distalen Ende des Lenkhebels ist ebenfalls in an sich bekannter Weise ein radführender Lenker, zum Beispiel eine Spurstange bzw. ein Spurstangenendkopf, zur Übertragung der von einer Lenkgetriebeeinheit übertragenen Lenkbewegung eines Lenkrads verbunden. Die von diesem radführenden Lenker auf den Lenkhebel des Radträgers übertragene Lenkkraft wirkt im Wesentlichen in Querrichtung des Lenkhebels, um eine Drehung des Radträgers entsprechend der Drehung des Lenkrads zu bewirken.

In dem Fall, in dem der Lenkhebel in dem distalen Abschnitt nicht über die Kopplungseinrichtung mit dem Radträger verbunden ist, werden das Lenkverhalten bzw. die Lenkeigenschaften des erfindungsgemäßen Radträgers im Wesentlichen alleine durch die Querelastizität des Lenkhebels bestimmt, da dieser eine wesentlich höhere Querelastizität aufweist als der Rest des Radträgers. Ist jedoch der Lenkhebel in dem distalen Abschnitt zusätzlich noch über die Kopplungseinrichtung mit dem Radträger verbunden, verringert die Verbindung mit dem Radträger die Querelastizität des Lenkhebels erheblich. Der erfindungsgemäße Radträger weist somit einen Lenkhebel mit veränderbarer Querelastizität auf, insbesondere läßt sich die Querelastizität des Lenkhebels und somit die Querelastizität am erfindungsgemäßen Radträger selbst auf wenigstens zwei Werte festlegen bzw. umschalten, nämlich einen ersten Querelastizitätswert, der sich aus der Querelastizität des Lenkhebels alleine ergibt, und einen zweiten Querelastizitätswert, der sich aus der zusätzlichen Verbindung des distalen Abschnitts über die Kopplungseinrichtung des Lenkhebels mit dem Radträger ergibt.

In einer vorteilhaften Ausgestaltung der Erfindung ist der Lenkhebel in Abhängigkeit von dem Betriebszustand des Fahrzeugs über die Kopplungseinrichtung zusätzlich mit dem Radträger verbindbar beziehungsweise von diesem trennbar. Diese Ausgestaltung erlaubt eine optimale Anpassung bzw. Veränderung der Lenkeigenschaften des Radträgers und somit des Fahrzeuglenkverhaltens an einen augenblicklichen Betriebszustand des Fahrzeugs, insbesondere an die augenblickliche Fahrzeuggeschwindigkeit. So kann im niedrigen und mittleren Fahrzeuggeschwindigkeitsbereich, in dem ein präzises Lenkverhalten des Fahrzeugs erwünscht ist, der Lenkhebel in seinem distalen Abschnitt mittels der Kopplungseinrichtung zusätzlich mit dem Radträger verbunden sein, um eine lediglich geringe Querelastizität des Lenkhebels und damit genaue Lenkung zu erreichen. Bei hohen Fahrzeuggeschwindigkeiten hingegen kann der Lenkhebel in dem distalen Abschnitt von dem Radträger getrennt sein, so dass die wesentlich höhere Querelastizität des Lenkhebels alleine das Lenkverhalten des Fahrzeugs bestimmt und somit ein ruhigeres, da weniger direkt ansprechendes, Lenkverhalten bietet.

Eine weitere vorteilhafte Ausgestaltung der Erfindung sieht ein Kragelement zur zusätzlichen Verbindung mit dem Lenkhebel vor, wobei das Kragelement beabstandet zum Lenkhebel angeordnet ist und eine geringere Querelastizität aufweist als der Lenkhebel. Das Kragelement ist zweckmäßigerweise zum Beispiel als Haltearm ausgebildet, der eine ähnliche Form wie der Lenkhebel aufweisen kann und sich in einem gewissen Abstand im Wesentlichen parallel zum Lenkhebel erstreckt. An seinem proximalen Ende kann das Kragelement in gleicher Weise wie der Lenkhebel mit dem Radträger verbunden sein, also zum Beispiel einstückig mit diesem ausgebildet sein oder auch stoff- und/oder formschlüssig mit diesem verbunden sein, zum Beispiel durch Schweißen, Kleben, Verschrauben und dergleichen.

Die Verbindung zwischen dem Lenkhebel und dem Kragelement erfolgt zweckmäßigerweise in dem distalen Abschnitt des Lenkhebels. Die genaue Lage der Verbindungsstelle zwischen Lenkhebel und Kragelement kann im Wesentlichen beliebig festgelegt werden und wird von den jeweiligen konstruktiven Vorgaben für den Radträger bzw. dem zu erreichenden Lenkverhalten des Radträgers abhängen. Allgemein wird die aus der Verbindung zwischen dem Lenkhebel und dem Kragelement bzw. dem Radträger resultierende Querelastizität des Lenkhebels abnehmen, je weiter die Verbindungsstelle zwischen dem Lenkhebel und dem Kragelement bzw. dem Radträger von dem proximalen Ende des Kragelements in Richtung des distalen Endes gewählt wird.

In einer vorteilhaften Ausgestaltung der Erfindung umfasst die Kopplungseinrichtung wenigstens ein Kopplungselement zur Herstellung der zusätzlichen Verbindung zwischen Lenkhebel und Radträger und einen Aktuator zur Betätigung des Kopplungselements. Als Kopplungselement sind jegliche Elemente verwendbar, die geeignet sind, den Lenkhebel mit dem Radträger bzw. dem Kragelement hinsichtlich der Übertragung der an dem Lenkhebel angreifenden Quer- bzw. Lenkkräfte lösbar zu verbinden, also zum Beispiel Klammern, die den Lenkhebel und das Kragelement gemeinsam umfassen, oder Stifte, die sich durch das Kragelement und den Lenkhebel erstrecken und den Lenkhebel und das Kragelement hinsichtlich der auf den Lenkhebel wirkenden Quer- bzw. Lenkkräfte miteinander verbinden. In vorteilhafter Weise betätigt der Aktuator das Kopplungselement, um die Verbindung zwischen dem Lenkhebel und dem Kragelement entweder herzustellen oder aufzuheben. Der Aktuator kann die Betätigung des Kopplungselements beispielsweise auf hydraulische, pneumatische, mechanische oder elektrische Weise ausführen. Darüber hinaus kann der Aktuator vollkommen automatisch gesteuert sein oder auf manuelle Eingaben beispielsweise durch den Fahrer eines Fahrzeugs reagieren.

Eine weitere vorteilhafte Ausgestaltung der Erfindung sieht vor, dass das Kopplungselement mit wenigstens einem Federelement in den Verbindungszustand von Lenkhebel und Kragelement vorspannbar ist. Diese Ausgestaltung bietet den großen Vorteil einer einfachen Ausfallsicherung, da der Lenkhebel in einem nicht aktivierten Zustand der Kopplungseinrichtung durch die Vorspannkraft des Federelements stets fest über das Kopplungselement mit dem Radträger bzw. dem Kragelement verbunden ist. Der Lenkhebel weist in diesem Verbindungszustand eine sehr geringe Querelastizität auf, so dass ein sicheres und genaues Lenken des Fahrzeugs in diesem Zustand auf jeden Fall gewährleistet ist.

Ein Verfahren zur Veränderung der Lenkeigenschaften eines Radträgers zur Anbindung eines Fahrzeugrads an ein Fahrzeug, insbesondere an ein Kraftfahrzeug, mit einem Lenkhebel, dessen proximales Ende mit dem Radträger verbunden ist, weist wenigstens die folgenden Schritte auf:
- Zusätzliches Verbinden des Lenkhebels in einem distalen Abschnitt mit dem Radträger mittels einer Kopplungseinrichtung, wobei der Lenkhebel eine höhere Querelastizität aufweist als der Rest des Radträgers, um die Querelastizität des Lenkhebels zu verringern; und
- Trennen des distalen Abschnitts des Lenkhebels von dem Radträger, um die Querelastizität des Lenkhebels zu vergrößern.

In einer weiteren vorteilhaften Ausgestaltung wird der Lenkhebel in Abhängigkeit von dem Betriebszustand des Fahrzeugs zusätzlich zu der vorhandenen Verbindung an dem proximalen Ende mit dem Radträger verbunden beziehungsweise von diesem getrennt, um so das Lenkverhalten des Fahrzeugs beispielsweise entsprechend der aktuellen Fahrzeuggeschwindigkeit verändern zu können. Wird die zusätzliche Verbindung getrennt, verbleibt natürlich die Verbindung an dem proximalen Ende des Lenkhebels zum Radträger. Insbesondere wird der Lenkhebel nach einer Ausgestaltung des erfindungsgemäßen Verfahrens bei niedrigen bis mittleren Fahrzeuggeschwindigkeiten zusätzlich zur vorhandenen Verbindung an dem proximalen Ende mit dem Radträger verbunden, um die Querelastizität des Lenkhebels zu verringern und somit ein präzises Lenkverhalten infolge der relativ starren Kopplung zwischen dem Lenkhebel und dem Rest des Radträgers zu erreichen. Andererseits wird bei hohen Fahrzeuggeschwindigkeiten diese zusätzliche Verbindung des distalen Abschnitt des Lenkhebels bevorzugt von dem Radträger getrennt bzw. aufgehoben, um die Querelastizität des Lenkhebels zu vergrößern und somit ein weiches und ruhiges Lenkverhalten des Fahrzeugs infolge der relativ elastischen Kopplung zwischen dem Lenkhebel und dem Rest des Radträgers zu erreichen.

Gemäß einer weiteren vorteilhaften Ausgestaltung der Erfindung umfaßt die Kopplungseinrichtung wenigstens ein Kopplungselement zur Herstellung der zur vorhandenen Verbindung an dem proximalen Ende zusätzlichen Verbindung zwischen dem Lenkhebel und dem Radträger und einen Aktuator, mit dem das Kopplungselement betätigt wird und somit der zusätzliche Verbindungszustand zwischen dem Lenkhebel und dem Radträger hergestellt wird.

Eine andere vorteilhafte Ausgestaltung des erfindungsgemäßen Verfahrens sieht vor, dass das Kopplungselement mit wenigstens einem Federelement in den Verbindungszustand von Lenkhebel und Radträger vorgespannt wird. Somit ist auch bei einem Ausfall der Kopplungseinrichtung, insbesondere des Aktuators, stets ein sicheres Lenkverhalten des Fahrzeugs gewährleistet.

Zielführend ist, wenn zusätzlich zur vorhandenen Verbindung des Lenkhebels zum Radträger eine weitere Verbindung des Lenkhebels zum Radträger vorgesehen wird, wozu vorteilhaft das Kragelement vorgesehen wird, welches über die Kopplungseinrichtung mit dem Lenkhebel verbindbar ist.

Weitere vorteilhafte Einzelheiten und Wirkungen der Erfindung sind im Folgenden anhand eines in den Figuren dargestellten Ausführungsbeispiels näher erläutert. Es zeigen:
- Fig. 1: eine perspektivische Ansicht eines erfindungsgemäßen Radträgers von schräg oben,
- Fig. 2: eine Seitenansicht des erfindungsgemäßen Radträgers aus Figur 1,
- Fig. 3: eine perspektivische Ausschnittsvergrößerung des erfindungsgemäßen Radträgers aus Figur 1 von schräg unten,
- Fig. 4: eine seitliche Teilschnittansicht des erfindungsgemäßen Radträgers aus Figur 1 entlang der in Figur 3 gezeigten Schnittlinie,
- Fig. 5: eine Ausschnittsvergrößerung der Teilschnittansicht aus Figur 4 zur Erläuterung eines Verbindungszustands, und
- Fig. 6: eine Ausschnittsvergrößerung der Teilschnittansicht aus Figur 4 zur Erläuterung eines Trennungszustands
- Figur 7: zeigt einen Radträger nach dem Stand der Technik.

In den unterschiedlichen Figuren sind gleiche Teile stets mit denselben Bezugszeichen versehen, so dass diese in der Regel auch nur einmal beschrieben werden.

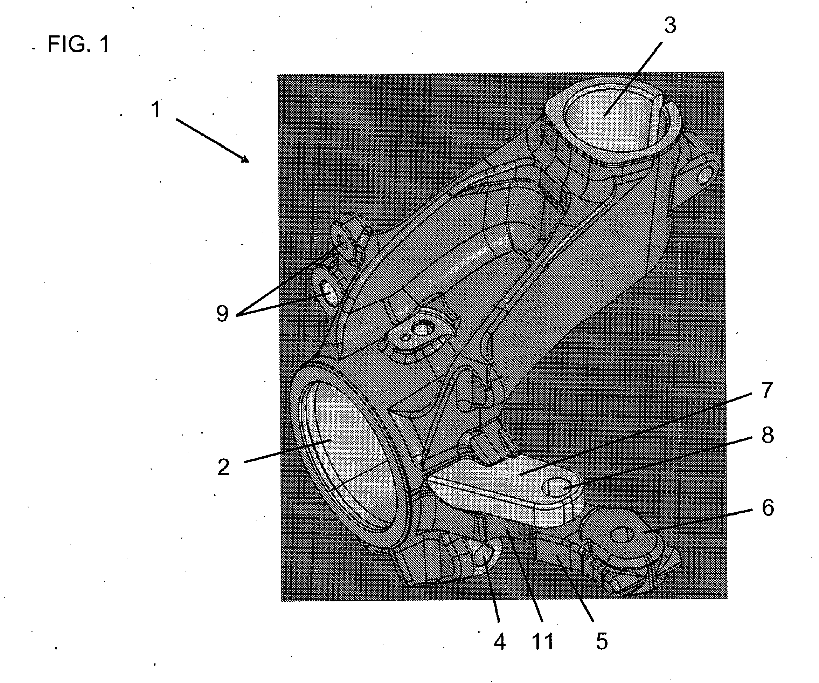

Figur 1 zeigt eine beispielhafte Ausführungsform eines erfindungsgemäßen Radträgers 1 in einer perspektivischen Ansicht von schräg oben. Der dargestellte Radträger 1 dient in an sich bekannter Weise der Anbindung eines in Figur 1 nicht dargestellten Fahrzeugrads an ein Fahrzeug, insbesondere an ein Kraftfahrzeug. Hierzu weist der Radträger 1 eine Bohrung 2 zur Aufnahme eines nicht gezeigten Radlagers auf, mittels welchem das Fahrzeugrad an dem Radträger 1 drehbar gelagert ist. Ferner weist der Radträger 1 eine obere Halterung 3 und eine untere Halterung 4 auf, mit denen der Radträger 1 an dem ebenfalls in Figur 1 nicht dargestellten Fahrzeugaufbau anlenkbar ist, beispielsweise über verschiedene Lenker einer Radaufhängung. Da der Radträger 1 ein Radträger beispielhaft für die gelenkten Fahrzeugräder eines Fahrzeugs ist, ist der Radträger 1 über die obere Halterung 3 und die untere Halterung 4 drehbar an der Radaufhängung gelagert.

Zur Aufbringung einer Dreh- bzw. Lenkkraft auf den Radträger 1 ist an diesem in Fahrzeuglängsrichtung gesehen ein nach hinten gerichteter Lenkhebel 5 angeordnet. Der Lenkhebel 5 ist in dem in Figur 1 gezeigten Ausführungsbeispiel an seinem proximalen Ende einstückig mit dem Radträger 1 verbunden, er könnte jedoch auch durch andere an sich bekannte stoff- und/oder formschlüssige Verbindungstechniken mit dem Radträger 1 verbunden sein, also zum Beispiel durch Schweißen, Kleben, Schrauben, Nieten und dergleichen. An seinem distalen Ende weist der Lenkhebel 5 eine Lenkhebelbuchse 6 auf, über die der Lenkhebel 5 mit einer nicht dargestellten Spurstange bzw. einem Spurstangenendkopf einer Lenkgetriebeeinrichtung, zum Beispiel eine Zahnstangenlenkung, verbunden ist. Über die Lenkgetriebeeinrichtung wird eine Drehbewegung eines mit der Lenkgetriebeeinrichtung verbundenen Lenkrads zunächst in an sich bekannter Weise in eine Längsbewegung der Zahnstange bzw. der Spurstange übertragen und anschließend von der Spurstange bzw. dem in der Lenkhebelbuchse 6 gelagerten Spurstangenendkopf auf den Lenkhebel 5 im Wesentlichen in einer horizontalen Querrichtung zum Lenkhebel 5 übertragen, so dass der Radträger 1 infolge dieser Kraftübertragung eine Drehbewegung um die Längsachsen der oberen und unteren Halterungen 3, 4 ausführt.

Der Lenkhebel 5 weist eine bestimmte Querelastizität auf, insbesondere eine Querelastizität in horizontaler Richtung, die wesentlich größer ist als eine Querelastizität des übrigen Radträgers 1. Die über die Lenkhebelbuchse 6 in den Lenkhebel 5 eingeleitete Lenkkraft kann aufgrund der Querelastizität des Lenkhebels 5 eine elastische Formveränderung des Lenkhebels 5 bewirken, das heißt der Lenkhebel 5 kann sich in einer im Wesentlichen horizontalen Ebene (z. B. einer Parallelen zur Fahrbahnebene) elastisch biegen. Mit Verringerung dieser Lenkkraft kehrt der Lenkhebel 5 sukzessive in seine Ursprungsform zurück.

In dem in Figur 1 dargestellten Ausführungsbeispiel des erfindungsgemäßen Radträgers 1 erstreckt sich der Lenkhebel 5 bezüglich der Fahrtrichtung nach hinten. Folglich ist die Zahnstange bzw. ein mit ihrem axialen Ende verbundener Spurstangenendkopf, der wiederum mit der Lenkhebelbuchse 6 verbunden ist, bei dem dargestellten Ausführungsbeispiel hinter dem Radmittelpunkt, das heißt der Mittelachse der Bohrung 2, angeordnet.

Ferner ist Figur 1 ein Kragelement 7, zum Beispiel ein Haltearm, des Radträgers 1 zu entnehmen. Das Kragelement 7 erstreckt sich bei dem gezeigten Ausführungsbeispiel im Wesentlichen parallel zum Lenkhebel 5. An seinem proximalen Ende ist das Kragelement 7 mit dem Radträger 1 einstückig verbunden, er könnte jedoch auch durch andere an sich bekannte stoff- und/oder formschlüssige Verbindungstechniken mit dem Radträger 1 verbunden sein, zum Beispiel durch Schweißen, Kleben, Schrauben, Nieten und dergleichen. Wie in Figur 1 ebenfalls zu erkennen ist, weist das Kragelement 7 eine kürzere Länge auf als der Lenkhebel 5. Ferner ist an dem distalen Ende des Kragelements 7 eine Bohrung 8 vorgesehen. Das Kragelement 7 weist gegenüber dem Lenkhebel 5 eine geringere, insbesondere wesentlich geringere, Querelastizität auf.

In dem Radträger 1 sind ferner verschiedene Bohrungen 9 zur Befestigung einer in den Figuren nicht dargestellten Bremsanlage angebracht.

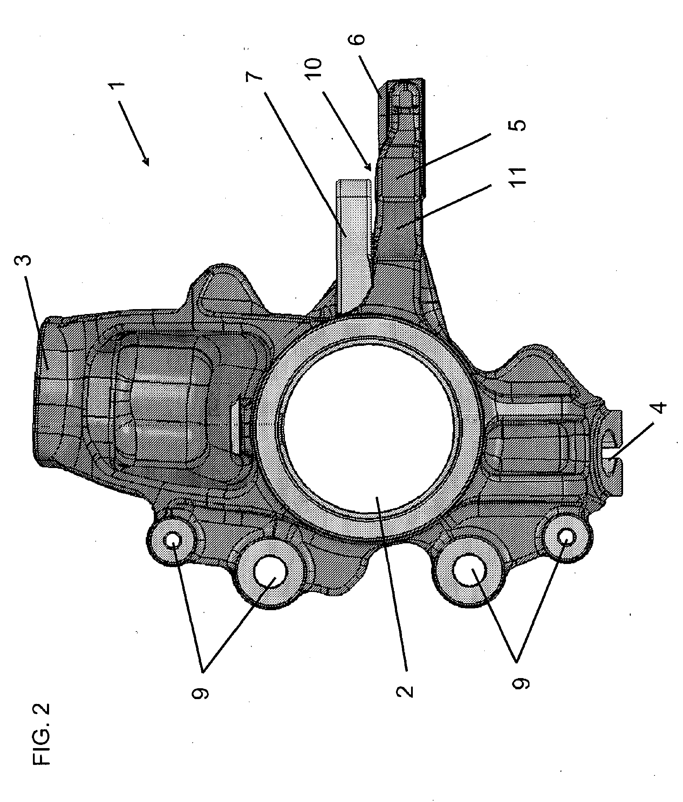

Figur 2 stellt eine Seitenansicht des erfindungsgemäßen Radträgers 1 aus Figur 1 dar. Wie der Darstellung zu entnehmen ist, verläuft das Kragelement 7 von seinem proximalen Ende in Richtung des distalen Endes mit einem gewissen Abstand 10 zum Lenkhebel 5, so dass das Kragelement 7 den Lenkhebel 5 im Wesentlichen entlang seiner Längserstreckung nicht berührt. Folglich stehen das Kragelement 7 und der Lenkhebel 5 bei der in Figur 2 gezeigten Situation in keiner Wirkverbindung zueinander.

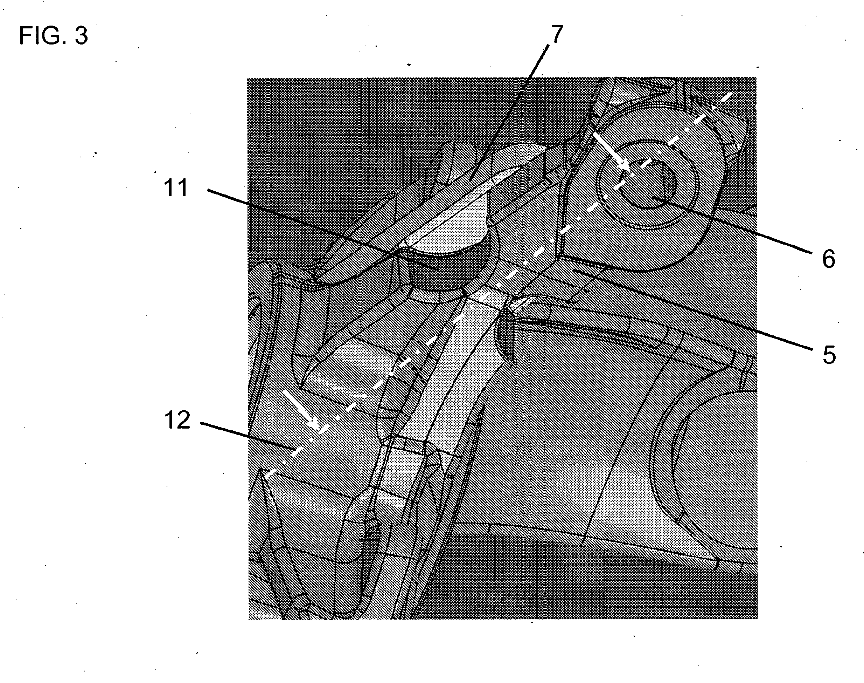

In Figur 3 ist der erfindungsgemäße Radträger 1 aus Figur 1 in einer perspektivischen Ausschnittsvergrößerung von schräg unten dargestellt. Dieser Darstellung ist deutlich zu entnehmen, dass der Lenkhebel 5 einen Bereich 11 höherer Querelastizität aufweist als der Rest des Lenkhebels 5. Der Bereich 11 wird hier beispielhaft von dem Kragelement 7 vollständig überdeckt. Der Bereich 11 des Lenkhebels 5 ist bei dem dargestellten Ausführungsbeispiel des Radträgers 1 beispielhaft durch einen geringeren Querschnitt gekennzeichnet. Hierzu weist der Lenkhebel 5 symmetrisch zur Längsache an beiden Schmalseiten eine kreisbogenförmige Materialausnehmung auf, die besonders geeignet ist, Kerbwirkungen bei der Biegebeanspruchung des Lenkhebels 5 in Querrichtung zu vermeiden.

Die Materialausnehmung in dem Bereich 11 ermöglicht es in besonders einfacher Weise, die gewünschte (hohe) Querelastizität des Lenkhebels 5 gezielt in einem Bereich zwischen dem proximalen und dem distalen Ende des Lenkhebels 5 festzulegen bzw. vorzugeben und darüber hinaus im Wesentlichen auf diesen Bereich 11 zu begrenzen. Der Querschnitt im Bereich 11 kann hierzu sowohl in seiner Ausformung, seiner Längs- und Höhenerstreckung als auch in seiner Tiefe entsprechend gewählt werden.

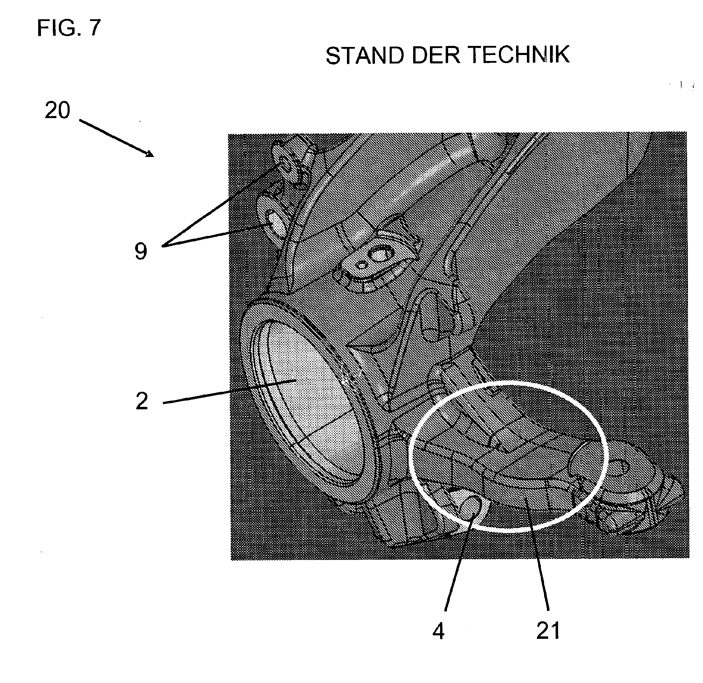

Die Enden des Lenkhebels 5 selbst sind im Wesentlichen wie bei einem Lenkhebel eines Radträgers nach dem Stand der Technik ausgebildet, wie er beispielsweise in Figur 7 dargestellt ist. Der Figur 7 ist ein Radträger 20 nach dem Stand der Technik mit einem Lenkhebel 21 zu entnehmen, der im Wesentlichen entlang seiner gesamten Längserstreckung derart ausgebildet ist, dass er eine relativ geringe Querelastizität aufweist, das heißt relativ starr ist. Insbesondere in dem in Figur 7 durch eine Kreislinie hervorgehobenen distalen Abschnitt weist der Lenkhebel 21 keine Merkmale für eine Erhöhung seiner Querelastizität auf, wie dies bei dem Lenkhebel 5 des erfindungsgemäßen Radträgers 1 der Fall ist. Lediglich die Endabschnitte des Lenkhebels 5 des erfindungsgemäßen Radträgers 1, das heißt das proximale sowie das distale Ende, sind mit den Endabschnitten des Lenkhebels 21 nach dem Stand der Technik vergleichbar. Die proximalen und distalen Endabschnitte des Lenkhebels 5 weisen dementsprechend genügend Material zur Herstellung einer stabilen Verbindung mit dem erfindungsgemäßen Radträger 1 (proximales Ende) einerseits und zur Aufnahme der Lenkhebelbuchse 6 zur Anbindung an eine Lenkgetriebeeinheit (distales Ende) andererseits auf.

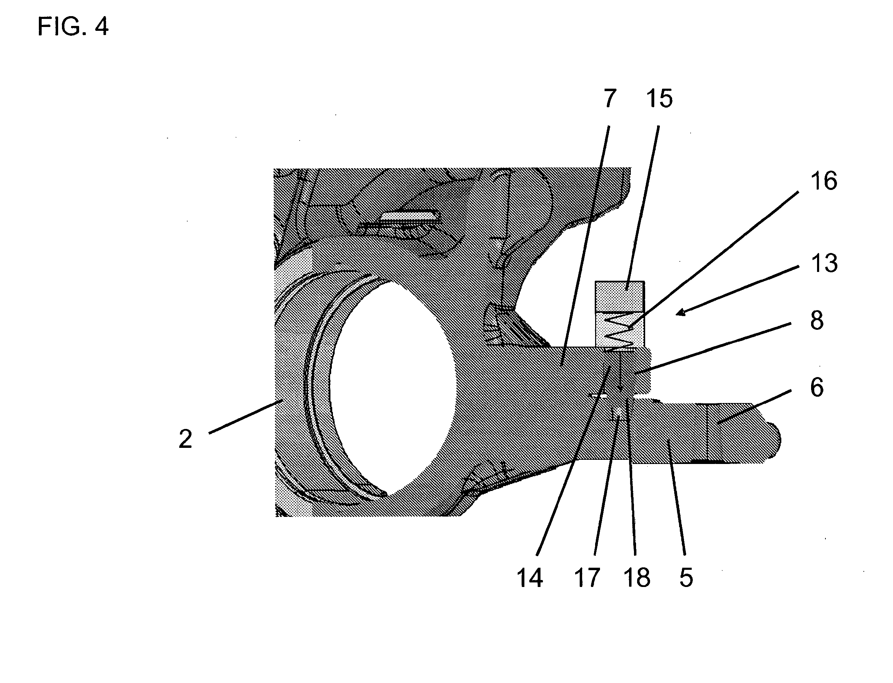

In Figur 4 ist eine seitliche Teilschnittansicht des erfindungsgemäßen Radträgers 1 aus Figur 1 entlang der in Figur 3 gezeigten Schnittlinie 12 dargestellt. Deutlich ist eine Kopplungseinrichtung 13 zu erkennen, mit der eine Verbindung zwischen dem Lenkhebel 5 und dem Kragelement 7 herstellbar ist, um die Querelastizität des Lenkhebels 5 zu verändern. Dies stellt eine zur an dem proximalen Ende des Lenkhebels 5 vorhandenen Verbindung des Lenkhebels 5 zum Radträger 1 zusätzliche Verbindungsmöglichkeit in einem distalen Abschnitt des Lenkhebels 5 zum Radträger 1 dar. Die Kopplungseinrichtung 13 umfaßt hierzu wenigstens ein Kopplungselement 14, mit dem die Verbindung zwischen dem Lenkhebel 5 und dem Kragelement 7, bzw. mit dem die zusätzliche Verbindung zwischen dem Lenkhebel 5 und dem Radträger 1 herstellbar ist. In dem dargestellten Ausführungsbeispiel des erfindungsgemäßen Radträgers 1 ist das Kopplungselement 14 im Wesentlichen ein zylinderförmiger Stift, der in der Bohrung 8 des Kragelements 7 längsverschiebbar gelagert ist. Eine vorteilhafte Ausgestaltung des Kopplungselementes 14 wird weiter unten noch beschrieben.

Vorteilhafterweise umfaßt die Kopplungseinrichtung 13 ferner einen Aktuator 15, der das Kopplungselement 14 betätigt, das heißt bei dem gezeigten Ausführungsbeispiel in der Bohrung 8 nach oben und/oder unten verschieben kann. Für eine vorteilhafte, einfache Ausführung der Kopplungseinrichtung 13 ist der Aktuator 15, der beispielsweise ein hydraulischer, pneumatischer, mechanischer oder elektrischer Aktuator sein kann, an dem Kragelement 7 angebracht.

Wie der Figur 4 weiter zu entnehmen ist, ist ein Federelement 16, zum Beispiel eine Schraubenfeder oder Tellerfeder, zwischen dem Aktuator 15 und dem Kopplungselement 14 angeordnet. Dieses Federelement 16 spannt das Kopplungselement 14 in Richtung des Lenkhebels 5 vor, das heißt bei dem in Figur 4 gezeigten Ausführungsbeispiel des Radträgers 1 drückt das Federelement 16 das Kopplungselement 14 in der Zeichnungsebene gesehen nach unten (Richtungspfeil). Diese Stellung ist bevorzugt gleichzeitig die Ruhestellung der Kopplungseinrichtung 13 bzw. des Kopplungselements 14, das heißt der Aktuator 15 ist in dieser Stellung inaktiv. Das Kopplungselement 14 kann vorteilhafter Weise alleine durch das Federelement 16 in dieser Stellung gehalten werden.

Die inaktive Stellung der Kopplungseinrichtung 13 stellt den Verbindungszustand zwischen dem Lenkhebel 5 und dem Kragelement 7 dar, da das Kopplungselement 14 in eine Aufnahmeöffnung 17 des Lenkhebels 5 hineinragt und somit bezüglich der an dem Lenkhebel 5 bzw. der Lenkhebelbuchse 6 angreifenden Quer- bzw. Lenkkraft eine formschlüssige Verbindung zwischen dem Lenkhebel 5 und dem Kragelement 7 bildet. Somit ist der Lenkhebel 5 in diesem Verbindungszustand über das Kopplungselement 14 fest mit dem Kragelement 7 verbunden. Die Querelastizität des Lenkhebels 5 wird in dieser Stellung im Wesentlichen durch die Querelastizität des Kragelements 7 bestimmt, die wesentlich geringer ist als die Querelastizität des Lenkhebels 5 alleine. Die aus der Verbindung mit dem Kragelement 7 resultierende geringe Querelastizität des Lenkhebels 5 bewirkt eine relativ starre Übertragung der an der Lenkhebelbuchse 6 angreifenden Lenkkraft auf das mit dem Radträger 1 verbundene Fahrzeugrad, so dass in der inaktiven Stellung der Kopplungseinrichtung 13 ein sehr genaues Lenkverhalten des Fahrzeugs erreicht wird, wie es beispielsweise bei niedrigen bis mittleren Fahrzeuggeschwindigkeit besonders erwünscht ist.

Da die inaktive Stellung der Kopplungseinrichtung 13 den Verbindungszustand zwischen dem Lenkhebel 5 und dem Kragelement 7 herstellt und diese Stellung den Lenkhebel 5 mit einer geringen resultierenden Querelastizität versieht, das heißt den Radträger 1 mit einem präzisen Lenkverhalten ausstattet, stellt der erfindungsgemäße Radträger 1 selbst bei einem Ausfall des Aktuators 15 ein sicheres Lenkverhalten des Fahrzeugs sicher.

Die aktive Stellung der Kopplungseinrichtung 13 ist die Stellung, in der das Kopplungselement 14 gegen die Federkraft des Federelements 16 durch den Aktuator 15 nach oben gezogen ist. Diese Stellung stellt den Trennungszustand zwischen dem Lenkhebel 5 und dem Kragelement 7 dar, da das Kopplungselement 14 wenigstens soweit aus der Aufnahmeöffnung 17 des Lenkhebels 5 herausgezogen ist, dass es in keinem direkten Kontakt mehr mit dem Lenkhebel 5 steht. Somit ist die formschlüssige Verbindung zwischen dem Lenkhebel 5 und dem Kragelement 7 bezüglich der an dem Lenkhebel 5 bzw. der Lenkhebelbuchse 6 angreifenden Quer- bzw. Lenkkraft in der aktiven Stellung der Kopplungseinrichtung 13 aufgehoben. Folglich wird die resultierende Querelastizität des Lenkhebels 5 in dieser Stellung im Wesentlichen alleine durch die Querelastizität des Lenkhebels 5 selbst bestimmt, die wesentlich höher ist als die Querelastizität des Kragelements 7 bzw. des übrigen Radträgers 1. Die hohe Querelastizität des Lenkhebels 5 bewirkt eine elastische Übertragung der an der Lenkhebelbuchse 6 angreifenden Lenkkraft auf das mit dem Radträger 1 verbundene Fahrzeugrad, so dass in der aktiven Stellung der Kopplungseinrichtung 13 ein weiches und ruhiges Lenkverhalten des Fahrzeugs erreicht wird, wie es beispielsweise bei hohen Fahrzeuggeschwindigkeit besonders erwünscht ist.

In Figur 4 ist ferner zu erkennen, dass der lenkhebelseitige Endabschnitt 18 des Kopplungselements 14 konisch ausgebildet ist und die Aufnahmeöffnung 17 des Lenkhebels 5 ebenfalls einen an den Endabschnitt 18 des Kopplungselements 14 angepassten konischen Sitz aufweist. Die konische Ausgestaltung des Endabschnitts 18 sowie der Aufnahmeöffnung 17 ermöglicht es, den Verbindungs- bzw. Trennungszustand zwischen dem Lenkhebel 5 und dem Kragelement 7 lediglich durch eine geringe Längsverschiebung des Kopplungselements 14 in der Bohrung 8 zu erreichen. Somit ist es während des Betriebs des erfindungsgemäßen Radträgers 1 nicht erforderlich, das Kopplungselement 14 jemals vollständig aus der Aufnahmeöffnung 17 zu entfernen. Auf diese Weise ist in besonders vorteilhafter Weise ein Notstopp bzw. Begrenzungsanschlag für den Lenkhebel 5 selbst in dem Trennungszustand gegeben, was einer besonders sicheren Verwendung des erfindungsgemäßen Radträgers 1 zuträglich ist.

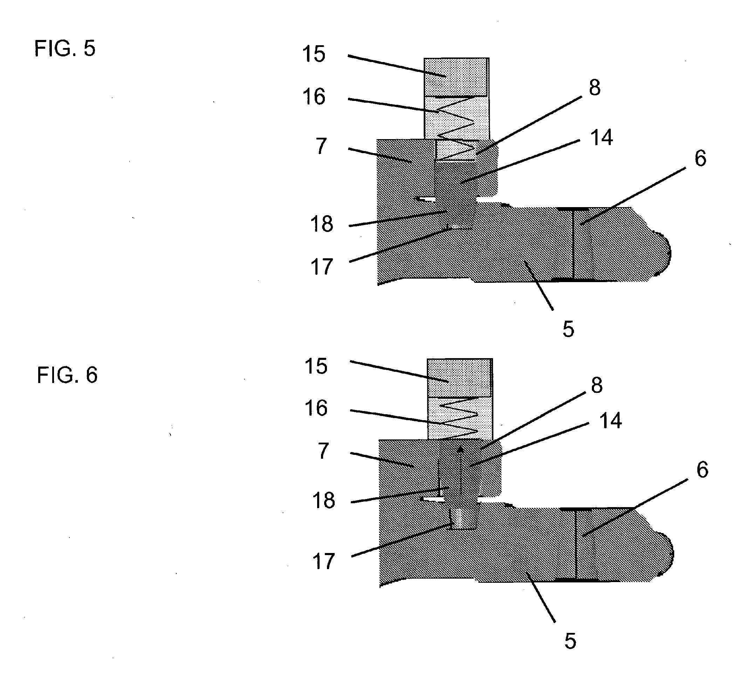

Die Figuren 5 und 6 stellen jeweils dieselbe Ausschnittsvergrößerung der Teilschnittansicht des Radträgers 1 aus Figur 4 dar, Figur 5 zeigt jedoch einen Verbindungszustand und Figur 6 einen Trennungszustand zwischen dem Lenkhebel 5 und dem Kragelement 7. Mit Hilfe der Figuren 5 und 6 wird nachfolgend auch das erfindungsgemäße Verfahren zur Veränderung der Lenkeigenschaften eines Radträgers beschrieben.

Das Verfahren weist wenigstens die folgenden Schritte auf:
- Zusätzliches Verbinden des Lenkhebels in einem distalen Abschnitt mit dem Radträger mittels einer Kopplungseinrichtung, wobei der Lenkhebel eine höhere Querelastizität aufweist als der Rest des Radträgers, um die Querelastizität des Lenkhebels zu verringern; und
- Trennen des distalen Abschnitts des Lenkhebels von dem Radträger, um die Querelastizität des Lenkhebels zu vergrößern.

Der Verbindungsschritt ist in Figur 5 dargestellt. Dort ist zu erkennen, dass das Kopplungselement 14, das Teil der Kopplungseinrichtung 13 ist und in dem gezeigten Ausführungsbeispiel als zylinderförmiger Stift ausgebildet ist, in der Bohrung 8 des Kragelements 7 derart nach unten verschoben ist, dass der konisch ausgebildete Endabschnitt 18 des Kopplungselements 14 vollständig in dem ebenfalls konisch ausgebildeten Sitz der Aufnahmeöffnung 17 des Lenkhebels 5 aufgenommen ist. Die Aufnahmeöffnung 17 befindet sich in einem distalen Abschnitt des Lenkhebels 5, der somit über das Kopplungselement 14 fest mit dem Kragelement 7 des Radträgers 1 verbunden ist. Da die Querelastizität des Kragelements 7 (wesentlich) geringer ist als die Querelastizität des Lenkhebels 5, wird die aus der Verbindung mit dem Kragelement 7 resultierende Querelastizität des Lenkhebels 5 im Wesentlichen durch die Querelastizität des Kragelements 7 bestimmt. Folglich wird die Querelastizität des Lenkhebels 5 durch die Kopplung mit dem Kragelement 7 verringert.

Darüber hinaus wird das Kopplungselement 14 durch das Federelement 16 in den Sitz der Aufnahmeöffnung 17 des Lenkhebels 5 vorgespannt. Der Aktuator 15, der bevorzugt zur Betätigung des Kopplungselements 14 verwendet wird, kann in der in Figur 5 dargestellten Verbindungsstellung inaktiv sein. Das Kopplungselement 14 kann alleine durch die Vorspannkraft des Federelements 16 gehalten werden, womit auch bei einem Ausfall des Aktuators 15 ein sicheres Lenkverhalten des erfindungsgemäßen Radträgers 1 und somit des gesamten Fahrzeugs gewährleistet ist.

In Figur 6 ist der Trennungsschritt des erfindungsgemäßen Verfahrens dargestellt. Das Kopplungselement 14 wird bei dem dargestellten Ausführungsbeispiel des Radträgers 1 mit dem Aktuator 15 gegen die Vorspannkraft des Federelements 16 aus der Aufnahmeöffnung 17 des Lenkhebels 5 in Richtung des Kragelements 7 gezogen. Da der Endabschnitt 18 des Kopplungselements 14 sowie der Sitz der Aufnahmeöffnung 17 konisch ausgebildet sind, ist lediglich eine kleine Verschiebung des Kopplungselements 14 in der Bohrung 8 des Kragelements 7 nach oben erforderlich, um den Verbindungszustand zwischen dem Lenkhebel 5 und dem Kragelement 7 aufzuheben und den Lenkhebel 5 von dem Kragelement 7 zu lösen. Wie in Figur 6 zu erkennen ist, wird das Kopplungselement 14 in besonders vorteilhafter Weise nicht vollständig aus der Aufnahmeöffnung 17 herausgezogen, sondern kann als Notstopp bzw. Begrenzungsanschlag für den Lenkhebel 5 in dem Trennungszustand verbleiben, was den erfindungsgemäßen Radträger 1 mit zusätzlichen Sicherheitseigenschaften versieht.

In dem in Figur 6 dargestellten Trennungszustand kann der Lenkhebel 5 bis zu dem von dem Kopplungselement 14 vorgegebenen Begrenzungsanschlag bezüglich der Querrichtung frei schwingen. Die resultierende Querelastizität des Lenkhebels 5 ist in diesem Zustand alleine durch seine eigene, im Vergleich zu dem Kragelement 7 bzw. dem Rest des Radträgers 1 (wesentlich) höhere Querelastizität gegeben. Gegenüber dem in Figur 5 dargestellten Verbindungszustand wird durch den Trennungsschritt des erfindungsgemäßen Verfahrens die Querelastizität des Lenkhebels 5 demnach erhöht.

In bevorzugter Ausführung des erfindungsgemäßen Verfahrens wird der Verbindungsschritt bei niedrigen bis mittleren Fahrzeuggeschwindigkeiten ausgeführt und der Trennungsschritt bei hohen Fahrzeuggeschwindigkeiten. Auf diese Weise ist mit dem erfindungsgemäßen Radträger 1 ein Lenkverhalten erreichbar, das bei niedrigen bis mittleren Fahrzeuggeschwindigkeiten besonders präzise und bei hohen Fahrzeuggeschwindigkeiten in gewünschter Weise ausgesprochen ruhig ist. Das Lenkverhalten kann mit dem erfindungsgemäßen Radträger sowie dem erfindungsgemäßen Verfahren dementsprechend an einen augenblicklichen Betriebszustand des Fahrzeugs optimal angepaßt werden. Hierzu sieht die vorliegende Erfindung wenigstens zwei während des Betriebs des Fahrzeugs umschaltbare Querelastizitätsstufen am Radträger selbst vor.

Der erfindungsgemäße Radträger sowie das erfindungsgemäße Verfahren wurden anhand eines in den Figuren dargestellten Ausführungsbeispiels näher erläutert. Der erfindungsgemäße Radträger sowie das Verfahren sind jedoch nicht auf das hierin beschriebene Ausführungsbeispiel beschränkt. So wurde die Querelastizität des Lenkhebels in dem gezeigten Ausführungsbeispiel beispielsweise durch eine Querschnittsverringerung in dem distalen, mittleren Abschnitt des Lenkhebels erhöht. Diese kann jedoch auch durch jede andere geeignete Maßnahme erhöht werden. Zum Beispiel könnte der Lenkhebel in seiner gesamten Längserstreckung einen geringeren Querschnitt und somit eine höhere Querelastizität aufweisen. Ebenso könnte durch den Einsatz unterschiedlicher Materialien der Lenkhebel in bestimmten Bereichen oder insgesamt derart ausgelegt sein, dass er im Vergleich zum Rest des Radträgers eine relativ hohe Querelastizität aufweist.

In bevorzugter Ausführung wird der erfindungsgemäße Radträger in einer Radaufhängung eines Kraftfahrzeugs zur Anbindung eines Fahrzeugrads verwendet.

### Bezugszeichenliste:

- 1: Radträger
- 2: Bohrung zur Aufnahme eines Radlagers
- 3:
- 4: Obere Halterung von 1
- 5: Untere Halterung von 1
- 6: Lenkhebel
- 6: Lenkhebelbuchse
- 7: Kragelement
- 8: Bohrung in 7
- 9: Bohrungen zur Befestigung einer Bremsanlage
- 10: Abstand zwischen 5 und 7
- 11: Bereich höherer Querelastizität von 5
- 12: Schnittlinie
- 13: Kopplungseinrichtung
- 14: Kopplungselement
- 15: Aktuator
- 16: Federelement
- 17: Aufnahmeöffnung in 5 für 14
- 18: Konischer Endabschnitt von 14
- 19:
- 20: Radträger nach Stand der Technik
- 21: Lenkhebel von 20

## Patentansprüche

1. Radträger zur Anbindung eines Fahrzeugrads an ein Fahrzeug mit einem Lenkhebel (5), dessen proximales Ende mit dem Radträger verbunden ist,
**dadurch gekennzeichnet, dass**
der Lenkhebel (5) zusätzlich in einem distalen Abschnitt mit dem Radträger mittels wenigstens einer Kopplungseinrichtung (13) verbindbar, wobei der Lenkhebel (5) eine höhere Querelastizität aufweist als der Rest des Radträgers.

2. Radträger nach Anspruch 1,
**dadurch gekennzeichnet, dass**
der Lenkhebel (5) in Abhängigkeit vom Betriebszustand des Fahrzeugs zusätzlich mit dem Radträger verbindbar ist.

3. Radträger nach Anspruch 1 oder 2,
**dadurch gekennzeichnet, dass**
ein an dem Radträger (1) angeordnetes Kragelement (7) zur Verbindung mit dem Lenkhebel (5) vorgesehen ist, wobei das Kragelement (7) beabstandet zum Lenkhebel (5) angeordnet ist und eine geringere Querelastizität aufweist als der Lenkhebel (5).

4. Radträger nach einem der vorhergehenden Ansprüche,
**dadurch gekennzeichnet, dass**
die Kopplungseinrichtung (13) wenigstens ein Kopplungselement (14) zur Herstellung der zusätzlichen Verbindung zwischen Lenkhebel (5) und Radträger und einen Aktuator (15) zur Betätigung des Kopplungselements (14) umfaßt.

5. Radträger nach einem der vorhergehenden Ansprüche,
**gekennzeichnet durch**
ein Kopplungselement (14), welches mit wenigstens einem Federelement (16) in den Verbindungszustand von Lenkhebel (5) und Kragelement (7) vorspannbar ist.

6. Radträger nach einem der vorhergehenden Ansprüche,
**gekennzeichnet durch**
ein als Stift ausgeführtes Kopplungselement (14), welcher Stift in einer Bohrung (8) eines Kragelements (7) längsverschiebbar gelagert ist und der Lenkhebel (5) eine entsprechende Aufnahmeöffnung (17) für das Kopplungselement (14) aufweist.

7. Radträger nach einem der vorhergehenden Ansprüche,
**dadurch gekennzeichnet, dass**
ein lenkhebelseitige Endabschnitt (18) eines Kopplungselements (14) konisch ausgebildet ist und eine Aufnahmeöffnung (17) des Lenkhebels (5) einen an den Endabschnitt (18) des Kopplungselements (14) angepaßten konischen Sitz aufweist.

8. Radträger nach einem der vorhergehenden Ansprüche,
**dadurch gekennzeichnet, dass**
der Lenkhebel (5) wenigstens einen Bereich (11) mit einer höheren Querelastizität aufweist als der Rest des Lenkhebels (5).

9. Radträger nach Anspruch 8,
**dadurch gekennzeichnet, dass**
der Bereich (11) der höheren Querelastizität des Lenkhebels (5) einen geringeren Querschnitt aufweist.

10. Verfahren zur Veränderung der Lenkeigenschaften eines Radträgers (1) zur Anbindung eines Fahrzeugrads an ein Fahrzeug mit einem Lenkhebel (5), dessen proximales Ende mit dem Radträger (1) verbunden ist, mit wenigstens den folgenden Schritten:
- Zusätzliches Verbinden des Lenkhebels (5) in einem distalen Abschnitt mit dem Radträger (1) mittels einer Kopplungseinrichtung (13), wobei der Lenkhebel (5) eine höhere Querelastizität aufweist als der Rest des Radträgers, um die Querelastizität des Lenkhebels (5) zu verringern; und
- Trennen der zusätzlichen Verbindung des distalen Abschnitts des Lenkhebels (5) von dem Radträger (1), um die Querelastizität des Lenkhebels (5) zu vergrößern.

## Claims

1. Wheel carrier for attaching a vehicle wheel to a vehicle comprising a steering lever (5), the proximal end thereof being connected to the wheel carrier, **characterized in that** the steering lever (5) may be additionally connected in a distal portion to the wheel carrier by means of at least one coupling device (13), wherein the steering lever (5) has a greater transverse elasticity than the remainder of the wheel carrier.

2. Wheel carrier according to Claim 1, **characterized in that** the steering lever (5) may be connected additionally to the wheel carrier depending on the operating state of the vehicle.

3. Wheel carrier according to Claim 1 or 2, **characterized in that** a collar element (7) arranged on the wheel carrier (1) is provided for connecting to the steering lever (5), wherein the collar element (7) is arranged spaced apart from the steering lever (5) and has a lower transverse elasticity than the steering lever (5).

4. Wheel carrier according to one of the preceding claims, **characterized in that** the coupling device (13) comprises at least one coupling element (14) for producing the additional connection between the steering lever (5) and the wheel carrier and an actuator (15) for actuating the coupling element (14).

5. Wheel carrier according to one of the preceding claims, **characterized by** a coupling element (14) which may be pretensioned by at least one spring element (16) in the connected state of the steering lever (5) and the collar element (7).

6. Wheel carrier according to one of the preceding claims, **characterized by** a coupling element (14) configured as a pin, which pin is longitudinally displaceably mounted in a bore (8) of a collar element (7) and the steering lever (5) has a corresponding receiver opening (17) for the coupling element (14).

7. Wheel carrier according to one of the preceding claims, **characterized in that** an end portion (18) of a coupling element (14) on the steering lever side is of conical configuration and a receiver opening (17) of the steering lever (5) has a conical seat adapted to the end portion (18) of the coupling element (14).

8. Wheel carrier according to one of the preceding claims, **characterized in that** the steering lever (5) has at least one region (11) with a greater transverse elasticity than the remainder of the steering lever (5).

9. Wheel carrier according to Claim 8, **characterized in that** the region (11) of greater transverse elasticity of the steering lever (5) has a smaller cross section.

10. Method for altering the steering characteristics of a wheel carrier (1) for attaching a vehicle wheel to a vehicle comprising a steering lever (5), the proximal end thereof being connected to the wheel carrier (1), comprising at least the following steps:
- additional connection of the steering lever (5) in a distal portion to the wheel carrier (1) by means of a coupling device (13), wherein the steering lever (5) has a greater transverse elasticity than the remainder of the wheel carrier, in order to reduce the transverse elasticity of the steering lever (5); and
- disconnection of the additional connection of the distal portion of the steering lever (5) from the wheel carrier (1) in order to increase the transverse elasticity of the steering lever (5).

## Revendications

1. Support de roue pour la liaison d'une roue de véhicule à un véhicule, comprenant un levier de direction (5) dont l'extrémité proximale est reliée au support de roue,
**caractérisé en ce que**
le levier de direction (5) peut en outre être relié, dans une partie distale, au support de roue au moyen d'au moins un dispositif d'accouplement (13), le levier de direction (5) présentant une élasticité transversale plus élevée que le reste du support de roue.

2. Support de roue selon la revendication 1,
**caractérisé en ce que**
le levier de direction (5) peut en outre être relié au support de roue en fonction de l'état de fonctionnement du véhicule.

3. Support de roue selon la revendication 1 ou 2,
**caractérisé en ce**
**qu'**un élément en porte-à-faux (7) disposé sur le support de roue (1) est prévu pour la liaison au levier de direction (5), l'élément en porte-à-faux (7) étant disposé à distance du levier de direction (5) et présentant une élasticité transversale plus faible que celle du levier de direction (5).

4. Support de roue selon l'une quelconque des revendications précédentes,
**caractérisé en ce que**
le dispositif d'accouplement (13) comporte au moins un élément d'accouplement (14) pour la réalisation de la liaison supplémentaire entre le levier de direction (5) et le support de roue et un actionneur (15) pour l'actionnement de l'élément d'accouplement (14).

5. Support de roue selon l'une quelconque des revendications précédentes,
**caractérisé par**
un élément d'accouplement (14) qui peut être précontraint à l'aide d'au moins un élément ressort (16) dans l'état de liaison du levier de direction (5) et de l'élément en porte-à-faux (7).

6. Support de roue selon l'une quelconque des revendications précédentes,
**caractérisé par**
un élément d'accouplement (14) réalisé sous forme de cheville, laquelle cheville est montée de manière déplaçable longitudinalement dans un alésage (8) d'un élément en porte-à-faux (7) et en ce que le levier de direction (5) comprend une ouverture de réception correspondante (17) pour l'élément d'accouplement (14).

7. Support de roue selon l'une quelconque des revendications précédentes,
**caractérisé en ce**
**qu'**une partie d'extrémité (18), située du côté du levier de direction, d'un élément d'accouplement (14) est conique et en ce qu'une ouverture de réception (17) du levier de direction (5) comprend un logement conique adapté à la partie d'extrémité (18) de l'élément d'accouplement (14).

8. Support de roue selon l'une quelconque des revendications précédentes,
**caractérisé en ce que**
le levier de direction (5) comprend au moins une région (11) présentant une élasticité transversale plus élevée que le reste du levier de direction (5).

9. Support de roue selon la revendication 8,
**caractérisé en ce que**
la région (11) d'élasticité transversale plus élevée du levier de direction (5) présente une section transversale plus petite.

10. Procédé de modification des caractéristiques de direction d'un support de roue (1) pour la liaison d'une roue de véhicule à un véhicule comprenant un levier de direction (5) dont l'extrémité proximale est reliée au support de roue (1), comportant au moins les étapes suivantes :
- liaison supplémentaire du levier de direction (5), dans une partie distale, au support de roue (1) au moyen d'un dispositif d'accouplement (13), le levier de direction (5) présentant une élasticité transversale plus élevée que le reste du support de roue, afin de réduire l'élasticité transversale du levier de direction (5) ; et
- séparation de la liaison supplémentaire entre la partie distale du levier de direction (5) et le support de roue (1), afin d'augmenter l'élasticité transversale du levier de direction (5).
